# EUROPEAN PATENT SPECIFICATION

(11) **EP 1 889 224 B1**
(45) Date of publication and mention of the grant of the patent: **03.05.2017**
(21) Application number: 06756000.3
(22) Date of filing: 22.05.2006
(51) Int. Cl.: G06T 7/00, G06T 17/00

(54) **AUTOMATED ORGAN LINKING FOR ORGAN MODEL PLACEMENT**
AUTOMATISIERTE ORGANVERBINDUNG FÜR ORGANMODELLPOSITIONIERUNG
LIAISON AUTOMATIQUE D'ORGANES POUR DISPOSITION DE MODELE D'ORGANE

(30) Priority: 23.05.2005 EP 05104348
(43) Date of publication of application: 20.02.2008
(73) Proprietor: Philips Intellectual Property & Standards GmbH, 20099 Hamburg (DE); Koninklijke Philips N.V., 5656 AE Eindhoven (NL)
(72) Inventor: KAUS, Michael, Weisshausstr. 2 52066 Aachen (DE); COHEN, Julius, Prof. Holstlaan 6 NL-5656 AA Eindhoven (NL)
(74) Representative: de Haan, Poul Erik
(86) International application number: PCT/IB2006/051631
(87) International publication number: WO 2006/126163

(56) References cited:
- WO-A-2005/038711
- ROTHWELL C A ET AL: "Efficient model library access by projectively invariant indexing functions" PROCEEDINGS OF THE COMPUTER SOCIETY CONFERENCE ON COMPUTER VISION AND PATTERN RECOGNITION. CHAMPAIGN, IL, JUNE 15 - 18, 1992, NEW YORK, IEEE, US, 15 June 1992 (1992-06-15), pages 109-114, XP010029301 ISBN: 0-8186-2855-3
- KOIKKALAINEN J ET AL: "Model library for deformable model-based segmentation of 3D brain MR-images" MEDICAL IMAGE COMPUTING AND COMPUTER-ASSISTED INTERVENTION - MICCAI 2002. 5TH INTERNATIONAL CONFERENCE. PROCEEDINGS, PART I (LECTURE NOTES IN COMPUTER SCIENCE VOL.2488) SPRINGER-VERLAG BERLIN, GERMANY, 2002, pages 540-547, XP008071642 ISBN: 3-540-44224-3
- AHMAD T ET AL: "Tracking and recognising hand gestures using statistical shape models" BMVC '95 PROCEEDINGS OF THE 6TH BRITISH MACHINE VISION CONFERENCE BMVA PRESS GUILDFORD, UK, vol. 2, 1995, pages 403-412 vol.2, XP008071693 ISBN: 0-9521898-2-8
- MCINERNEY T ET AL: "Deformable Models in Medical Analysis: A Survey" MEDICAL IMAGE ANALYSIS, OXFORDUNIVERSITY PRESS, OXFORD, GB, vol. 1, no. 2, June 1996 (1996-06), pages 91-108, XP002230283 ISSN: 1361-8423 cited in the application

## Description

This invention relates to a linking system for linking a particular object model from a set of object models with an object in an image.

The invention further relates to a registration system for registering the particular object model with the linked object.

The invention further relates to a segmentation system for segmenting the object on basis of the registered particular object model.

The invention further relates to a workstation comprising the system for linking an object model from a set of object models with an object in an image.

The invention further relates to a method of linking a particular object model from a set of object models to an object in an image.

The invention further relates to a computer program product to be loaded by a computer arrangement, comprising instructions for linking an object model from a set of object models with an object in an image.

An embodiment of the linking systems of the kind described in the opening paragraph is known from "Deformable Models in Medical Image Analysis: A Survey" by Tim McInerney and Demetri Terzopoulos, published in Medical Image Analysis, 1(2): 91-108, 1996. This article describes how to create a link between an object of interest in the image and a corresponding object model from a set of object models. Because the use of deformable models typically employs local search methods, the object model to be linked must be placed close to the object of interest by the user using, for example, a mouse. First, the user has to select the object model from a menu of object models. If the menu comprises a large number of object models, scrolling or going down the hierarchy of the menu of object models may be required. The selected object model then appears in the image, typically in the centre of the image, and the user has to drag this object model and drop it close to the object of interest. Thus, several mouse clicks and mouse movements are necessary to perform these interactions. If several objects in the image need to be linked with their respective object models, several interaction sequences have to be carried out by the user.

"Efficient Model Library Access by Projectively Invariant Indexing Function" by Rothwell C A et al, published on Proceedings of the Computer Society Conference on Computer Vision and Pattern Recoginition, Champaign, IL, June 15-18, 1992, pages 109-114, discloses a model based vision system which uses projectively invariant descriptors to expedite recogition, in which the steps of automatical features extraction, model construction, hypothesis generation and hypothesis verification are discussed.

It is an object of the invention to provide a linking system of the kind described in the opening paragraph that requires relatively few user interactions to create the link.

This object of the invention is achieved in that the linking system comprises:
- a first selecting unit configured to select the object in the image in response to a user input from an input device indicating a region of the object in the image;
- a determining unit configured to determine a subset of related candidate object models from the set of object models on basis of the selected object, wherein the subset comprises a particular object model to be linked to the selected object; and
- a second selecting unit configured to select the particular object model from the subset of related candidate object models based on a user input from the input device, and
- a display unit configured to display a representation of the subset of related candidate object models,
wherein the subset of related candidate object models from the set of object models is determined by computing a similarity measure between each of the object models in the set of object models and the selected object in the image,
wherein the similarity measure is computed by the ratio of the non-overlap area or volume of the selected object and the object model over the overlap area or volume of the selected object and the object model.

By starting the linking process with selecting the object in the image, the task of determining the subset of related candidate object models is delegated to the determining unit and does not require user interaction. That means that a kind of filtering is applied to find an appropriate model. The user does not have to make the selection of the model from the relatively large set.

Furthermore, the process of selecting the particular object model from the subset of related candidate object models requires a minimal amount of user interaction like clicking a mouse button to accept an indicated object model and perhaps browsing through a short list of related candidate object models.

In an embodiment of the linking system according to the invention, determining the subset of related candidate object models is based on a feature of the selected object, the feature being at least one of the following: shape of the selected object, size of the selected object, location of the selected object in the image, orientation of the selected object in the image, intensity distribution in the selected object, and colour distribution in the selected object. In order to determine the subset of related candidate object models the system is arranged to evaluate the feature of the object in the image. This feature value is then compared with the corresponding feature value of an object model from the set of object models. If the object feature value and the object model feature value are similar, this object model may be added to the subset of related candidate object models. A plurality of features of the object and of the object model can be used to determine if the object model is suitable to be included with the subset of related candidate object models.

In an embodiment of the linking system according to the invention, the object is an organ or a part of an organ of a human or an animal and the set of object models is an atlas of organs or parts of organs of a human or an animal. The application of the linking system according to the invention is particularly advantageous in the medical image analysis. Here the set of object models, also referred to as an atlas of organ models, has a well defined structure and contents.

It is a further object of the invention to provide a method of the kind described in the opening paragraph that requires relatively few user interactions to create a link between an object and an object model. This is achieved in that the method comprises:
- a first selecting step for selecting the object in the image in response to an input from an input device indicating a region of the object in the image;
- a determining step for determining a subset of related candidate object models from the set of object models on basis of the selected object, wherein the subset comprises a particular object model to be linked to the selected object;
- a displaying step for displaying a representation of the subset of related candidate object models and
- a second selecting step for selecting a particular object model from the subset of related candidate object models based on a user input,
wherein in the determining step, the subset of related candidate object models from the set of object models is determined by computing a similarity measure between each of the object models in the set of object models and the selected object in the image,
wherein the similarity measure is computed by the ratio of the non-overlap area or volume of the selected object and the object model over the overlap area or volume of the selected object and the object model.

It is a further object of the invention to provide a computer program product of the kind described in the opening paragraph. This is achieved in that the computer program product, to be loaded by a computer arrangement, comprises instructions for linking an object model from a set of object models with an object in an image, the computer arrangement comprising processing unit and a memory, the computer program product, after being loaded, providing said processing unit with the capability to carry out the following tasks:
- selecting the object in the image in response to an input from an input device indicating a region of the object in the image;
- determining a subset of related candidate object models from the set of object models on basis of the selected object, wherein the subset comprises a particular object model to be linked to the selected object;
- displaying a representation of the subset of related candidate object models and
- selecting a particular object model from the subset of related candidate object models based on a user input,
wherein the subset of related candidate object models from the set of object models is determined by computing a similarity measure between each of the object models in the set of object models and the selected object in the image,
wherein the similarity measure is computed by the ratio of the non-overlap area or volume of the selected object and the object model over the overlap area or volume of the selected object and the object model.

Modifications and variations thereof, of the registration system, of the segmentation system, of the workstation, of the method, and/or of the computer program product, which correspond to modifications of the linking system and variations thereof, being described, can be carried out by a skilled person on the basis of the present description.

These and other aspects of the linking system, of the registration system, of the segmentation system, of the workstation, of the method, and of the computer program product, according to the invention will become apparent from and will be elucidated with respect to the implementations and embodiments described hereinafter and with reference to the accompanying drawings, wherein:
Fig. 1 schematically shows an embodiment of the linking system;
Fig. 2 schematically shows an embodiment of the first selection unit;
Fig. 3 schematically shows a partitioned image;
Fig. 4 schematically shows an embodiment of the registration system;
Fig. 5 schematically shows an embodiment of the segmentation system;
Fig. 6 schematically shows an embodiment of the workstation; and
Fig. 7 schematically shows an embodiment of the linking method.
The same reference numerals are used to denote similar parts throughout the Figures.

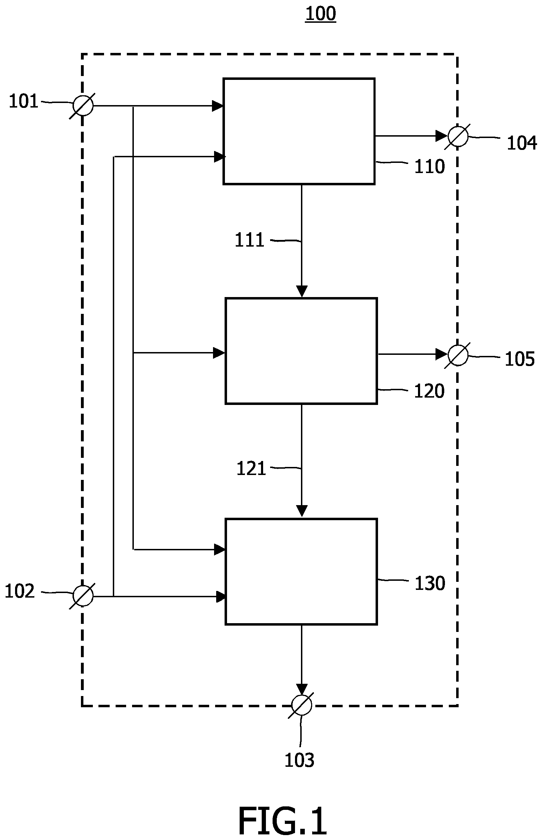

Fig. 1 schematically shows an embodiment of the linking system 100. This embodiment comprises:
   - a first selection unit 110 for selecting the object in the image 300;
   - a determining unit 120 for determining a subset of related candidate object models from the set of object models on the basis of the selected object; and
   - a second selection unit 130 for selecting the particular object model from the subset of related candidate object models.

The units are connected to each other via the internal connections 111 and 121. There are two input connectors 101 and 102, and three output connectors 103, 104, and 105.

The first selection unit 110 is arranged to receive two inputs: an image 300 from the data input connector 101, which may be connected to a data storage device, and an indicated region in the image from the user input connector 102, which may be connected to a user input device. Using these inputs, the first selection unit 110 is arranged to compute the selected object in the image 300 and to pass it to the determining unit 120 via the first internal connection 111. The first selection unit is also arranged to output the image 300, the indicated region, and possibly the selected object to the first output connector 104, which may be connected to a display device.

The determining unit 120 is arranged to compare the object received via the first internal connection 111 to the object models from the set of object models obtained from, for example, a data storage device via the data input connector 101. The determining unit 120 is further arranged to determine the subset of related candidate object models and to pass it to the second selection unit 130 via the internal connection 121. The determining unit 120 is also arranged to output a representation of the subset of related candidate object models, for example, a scrollable list of these models, to the second output connector 105, which may be connected to a user display device.

The second selection unit 130 is arranged to compute the particular object model and to output the particular object model to the model output connector 103. Optionally, the outputted data may comprise a reference data defining the placement of the model in the image 300. The computation of the particular object model is based on a second user input obtained via the user input connector 102 from, for example, a user input device. Alternatively (not part of the invention) the second selection unit may be arranged to select the particular object model, which best fits the selected object or the image 300.

The input connector 101 may be connected to the data storage device such as a RAM, ROM, hard disk drive, and/or optical disc drive. The input connector 102 may be connected to a user input device such as a mouse, a trackball, a touch screen, and/or a keyboard. Alternatively, some of these I/O devices can be part of the linking system.

The output connectors 103, 104, and 105 may be connected to a display device and/or to a data storage device. Optionally, the display device and/or data storage device are part of the system linking system 100. Optionally, a user input device is part of the system linking system 100.

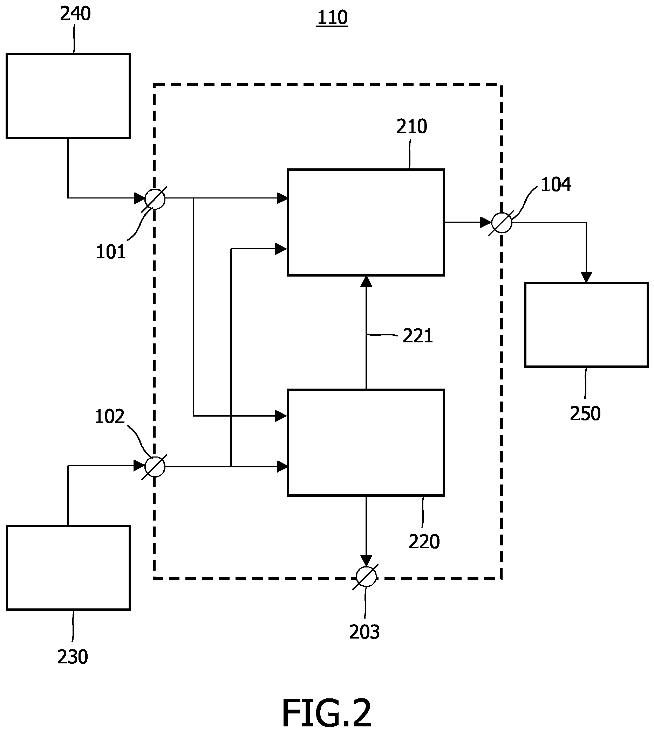

Fig. 2 schematically shows an embodiment of the first selection unit 110. This unit comprises a computing unit 210 and an indicating unit 220 connected via an internal connection 221, two input connectors 101 and 102 connected to a data storage device 230 and a user input device 240, respectively, and an output connector 104 connected to a display device 250. The computing unit 210 is arranged to receive the indicated region input from the user input device 230 and the image 300 from the data storage device 240 and is arranged to use these inputs to compute the selected object. Computing of the selected object is here understood as processing the user input and the image data to compute a representation of the selected object. For example, computing the selected object may involve a local segmentation of the image in the indicated region and in its vicinity. The selected object may be represented by a bitmap, a grayscale map or a color map. Alternatively, it may be represented by a feature such as size (area, volume, diameter, etc.), location, orientation, or topological genus. This representation of the selected object is outputted to the output connector 104. The same or an alternative representation of the selected object is also sent to the indicating unit 210 via the internal connection 221.

The indicating unit 210 is arranged to receive the indicated region 304 from the user input device 230 and the image 300 from the data storage device 240. The indicating unit 210 is arranged to combine the image and the indicated region into one picture to be displayed on the display device 250, for illustrating the indicated region in the image 300. Optionally, the indicating unit may also include a representation of the selected object in the picture to be displayed on the display device 250. The indicated region may comprise a pixel or a plurality of pixels in a 2D-image. Alternatively, the indicated region may comprise a voxel or a plurality of voxels in a 3D-image.

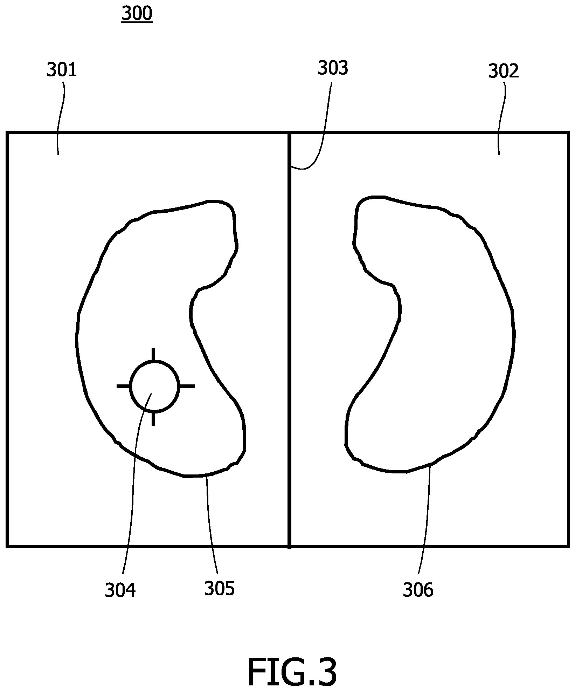

In an embodiment of the linking system 100, the image 300 is partitioned into several portions. This partitioning may be done at the image pre-processing stage. Each portion of the image 300 is assigned a name of the corresponding object. The information about the partition, i. e. about the borders and the names of image portions, is comprised in the image data. The image inputted at the data input connector 101 comprises the partition description including the borders and the name of each portion. Fig. 3 schematically shows a partitioned image 300 with two image portions 301 and 302. The border 303 separating the two image portions 301 and 302 is an approximate border between the objects 305 and 306 comprised in these portions. The partitioning can be done, for example, manually by an operator who is familiar with the contents of images in the relevant application domain. Each portion of the image comprises an object. The image portion 301 comprises the object 305 and the image portion 302 comprises the object 306. The portions are named after the objects they comprise. The indicated region 304 is typically comprised in one image portion. In this case the name of the portion containing the indicated region 304 defines the selected object. Computing the selected object is retrieving the name assigned to the indicated portion 301 comprising the indicated region 304. If the indicated region 304 is covered by a plurality of image portions, the name of the portion having the largest overlap with the indicated region may be used to define the selected object. Alternatively, the first selection unit 110 may output a plurality of names of portions having non-empty intersections with or being close to the indicated region.

The determining unit 120 is arranged to receive a representation of the selected object or objects from the first selection unit 110 via the first internal connector 111. Here the selected object is compared to each object model from the set of object models, which set can be read from a memory storage device via the input connector 102. This set of object models depends on the application. For example, in medical imaging it can be a set of human organs, in cell morphology it can be a set of common cellular structures. Depending on a feature representing the selected object, the determining unit 120 uses the corresponding feature of the object models. In case of the bitmap representation of the selected object, the feature is the shape of the object. The determining unit 120 is arranged to compare the shape of the selected object to the shape of the object model. The shape of the object and/or the shape of the object model can be rescaled and/or transformed by a suitable transformation. The object model with a shape similar to that of the selected object is added to the subset of related candidate object models. The similarity measure for comparing the similarity of the selected object and the object model is the ratio of the non-overlap area or volume of the selected object and the object model over the overlap area or volume of the selected object and the object model, wherein the area or volume of non-overlapping parts is minimized by scaling and rigidly transforming the object model, for example. In case of a perfect overlap this ratio is equal to zero. A threshold criterion can be applied to the computed ratio. If this ratio is less than the threshold value then the object model is included in the subset of related candidate object models. Otherwise, the object model is not included with the subset of related candidate object models. Optionally, the maximum number of models in the subset of related candidate object models can be defined. For example, the subset of related candidate object models may comprise exactly one model, which is the most similar to the selected object.

A generalization of the shape feature is the intensity distribution in the selected object or color distribution in the selected object. Using the intensity or the color distribution feature requires redefining the similarity measure. For example, the area or volume of the non-overlapping part of the selected object and the object model may be replaced by an integral of the absolute value of the difference between the gray values at the corresponding pixels or voxels of the object model superimposed on the selected object in a gray-scale image. To minimize the integral value, each object model from the set of object model may be, for example, elastically registered with the image.

Other features such as size, location or orientation of the selected object can also be employed to determine the subset of related candidate object models. Typically, using one of these features requires the images to have a standard size and/or position with respect to the visualized objects. These features may be particularly useful if the shape of objects and object models is constrained. For example, if the objects are circular, the radius and the position of the center fully characterizes such a circular object. A combination of two or more features, such as the radius and the position of the center of the circle, may also be used to determine the set of related candidate object models.

In an embodiment of the linking system 100, which employs partitioned images, the feature used by the determining unit 120 to determine the subset of related candidate object models is the name of the selected object or the set of names of the selected objects. The object model having the same name as the selected object is included in the subset of related candidate object models

The subset of related candidate object models is outputted to the internal connection 121 and passed to the second selection unit 130. The object models comprised in the subset of related candidate object models are outputted to the output connector 105 in a form that allows displaying the models comprised in this subset on a display device. For example, the models can be displayed as a scrollable name list or as a window with selectable icons with each name or icon, respectively, representing an object model from the subset of related candidate object models.

The second selection unit 130 is arranged to receive the subset of related candidate object models from the determining unit 120 via the second internal connection 121. The function of the second selection unit 130 is to select the particular object model to be linked to the object selected by the first selection unit 110.

In the invention of the linking system 100, the user selects the particular object model using a user input device. The second selection unit 130 is arranged to read the user input from the input connector 102. The user can see the list of names of object models comprised in the subset of related candidate object models. One entry in this list may be indicated by a highlight mark, for example. The user can move the highlight mark to indicate an arbitrary object model from the list in order to select an object model as the particular object model. The user can select the indicated object by clicking the mouse, for example, and the second selection unit may be arranged to set the indicated object model as the selected particular object model.

In an embodiment of the linking system 100, the displayed list of object models from the subset of related candidate object models may contain a link to this full set of object models in case the user does not want to accept any object model from the displayed list. Optionally, the displayed list may also contain an "empty object" to enable the user to reject all object models from the subset of related candidate models and leave the selected object with no particular object model linked with it.

In an embodiment of the linking system 100, the second selection unit 130 may be arranged to use the intensity distribution in the selected object 305 to select the particular object model. Optionally, the second selection unit 130 may be arranged to register the object model with the image 300 comprising the selected object 305. An image registration technique, as disclosed in an article entitled "An algorithmic overview of surface registration techniques for medical imaging" by Michel A. Audette, Frank P. Ferrie, and Terry M. Peters, published in Med. Image. Anal. 4 (3), 201-217, 2002, may be employed. In this method, an object model from the set of related candidate object models is transformed to maximize its similarity with an underlying image fragment representing the selected object 305. Many types of image transformations are known in the art, for example, the rigid transformations, the affine transformations and the elastic deformations. Also, there are many similarity measures to choose from, for example, the mutual information as disclosed in an article entitled "Medical image registration using mutual information" by Frederik Maes, Dirk Vandermeulen, and Paul Suetens, published in Proceedings of the IEEE, Vol. 91(10), 1699-1722, 2003. By registering an object model with the image 300, an additional goal is reached: the placement of the object model. The registration-based solution not only determines the particular object model and adjusts its shape to fit the selected object 305, but also finds the best possible placement of the particular object model in the image 300. Other embodiments may employ comparing other features such as size, location, or orientation of the selected object. A combination of two or more features can be advantageous.

The displayed objects from the subset of related candidate object models may be ordered from the most similar to the least similar with the most similar object models occupying the most prominent position among the displayed object models. Optionally, the value of similarity measure can be displayed together with each related candidate object model to assist the user in selecting the particular object model.

In an embodiment of the linking system 100, (not part of the invention) the second selection unit 130 may be arranged to select the particular object model without any user input. The most similar object model from the subset of related candidate object models may be automatically selected as the particular object model. Alternatively, if the subset of related candidate object models comprises only one element, this element may automatically become the particular object model.

The second selection unit 130 is arranged to output a representation of the particular object model to the output connector 103. This particular object model can be stored in a storage device connected to the output connector 103 and/or displayed on a display device. Alternatively, if the linking system 100 of the present invention is a subsystem of another system, such as a segmentation system, the particular object model can be passed from the linking system to another unit of this segmentation system.

In the previously described embodiments of the linking system 100, the storage device 240 for storing the input image data to the first selection unit 110 and for storing the output data obtained from the first selection unit 110 is presented as a device external to the linking system 100. In other embodiments this device can be comprised in the linking system 100 and connected via internal connectors to the first selection unit 110, the determining unit 120 and/or the second selection unit 130. For example, the set of object models can be stored on an internal hard disk of the linking system 100. The linking system 100 comprises a display device for displaying the image and other structures such as the indicated region, selected object, list comprising the names of object models comprised in the subset of related candidate object models, and/or highlight mark for indicating a name in the list.

The skilled person will understand that it may be advantageous to replace the subset of related candidate object models determined by the determining unit 120 and transferred to the second selection unit 130 with the full set of object models. In this case a separate determining unit 120 is redundant.

The first selection unit 110, the determining unit 120 and the second selection unit 130 may be implemented using one processor. Normally, their functions are performed under control of a software program product. During execution, the software program product is normally loaded into a memory, like a RAM, and executed from there. The program may be loaded from a background memory, like a ROM, hard disk, or magnetic and/or optical storage, or may be loaded via a network like Internet. Optionally, an application specific integrated circuit may provide the disclosed functionality.

There are many possible applications of the linking system 100 of the present invention. A particularly advantageous application is the application of the linking system 100 of the invention to medical images. The objects in medical images may comprise various internal organs, bones, and/or blood vessels, for example. The set of object models in medical images is well defined. This set is often referred to as the atlas of organ models. It may have some internal hierarchy wherein some smaller organs are parts of larger organs, like heart ventricles and heart, or stomach and upper digestive system. Furthermore, the model-based image segmentation may be useful in analysing images from other knowledge domains as long as it is possible to define a set of models, which already have an a priori knowledge about the objects occurring in the images. For example, the system can be useful in cell morphology for analyzing cell images; in plant histology for analyzing microscopic images of certain classes of plant tissues; in agriculture for analyzing aerial images of crop fields in order to identify individual crops; in geography for analyzing aerial images to identify certain elements such as mountain ranges, or cities, towns, villages and settlements.

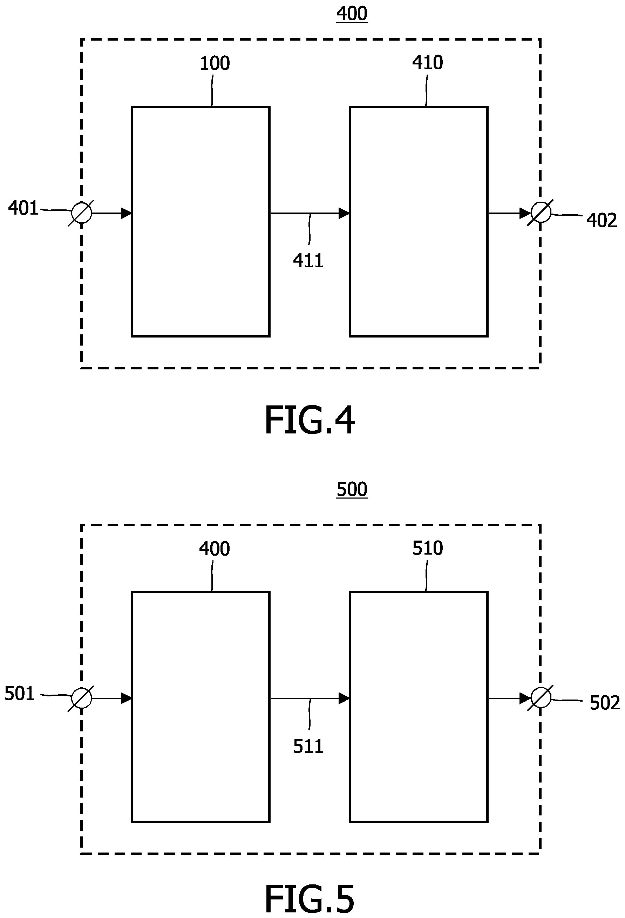

The linking system of the invention can be further used for object model registration and for image segmentation based on object model registration. Fig. 4 schematically shows an embodiment of the registration system 400 comprising a linking unit 100 connected via an internal connection 411 with a registering unit 410, an input connector 401, and an output connector 402. The registration system 400 is arranged to output the registered object models to the output connector 402. They can be used to extract object features. In medical image applications, the registration system 400 can be used to store the registered organ models in a database for future reference, to see what changes occur in an organ or in a pathogenic tissue, such as a tumour or a nodule, over a period of time, and/or to assist a treatment planning. Fig. 5 schematically shows an embodiment of the segmentation system 500 comprising a registration unit 400 connected via an internal connection 511 with a segmenting unit 510, an input connector 501, and an output connector 502. The model-based segmentation improves both the speed and the accuracy of segmentation. This improvement is due to the fact that an object model already comprises a priori knowledge about the selected object in the image. The segmentation system 500 of the present invention improves the speed of segmentation due to a better linking method employed by the registration unit 400.

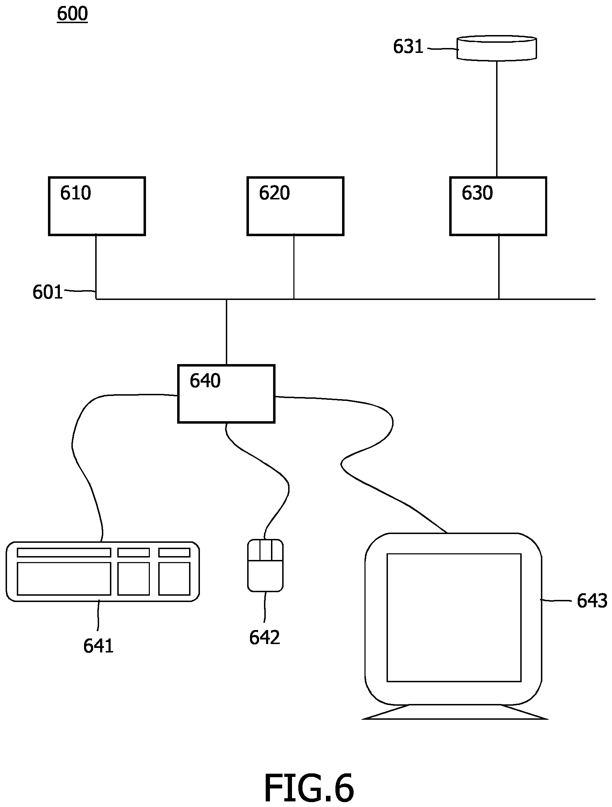

Fig. 6 schematically shows an embodiment of the workstation 600. The system comprises a system bus 601. A processor 610, a memory 620, a disk I/O adapter 630, and a UI adapter 640 are operatively connected to the system bus 601. A disk storage device 631 is operatively coupled to the disk I/O adapter 630. A keyboard 641, a mouse 642 and a display 643 are operatively coupled to the UI adapter 640. The linking system, the registration system, or the segmentation system of the invention, implemented as a computer program, is stored in the disk storage device 631. The workstation 600 can load the program into memory 620 and execute the program on the processor 610. The user inputs information to the workstation 600 using the keyboard 641 and/or the mouse 642. The workstation outputs information to the display device 643. The skilled person will understand that there are numerous other embodiments of the workstation known in the art and that the present embodiment serves the purpose of illustrating the invention and must not be interpreted as limiting the invention to this particular embodiment.

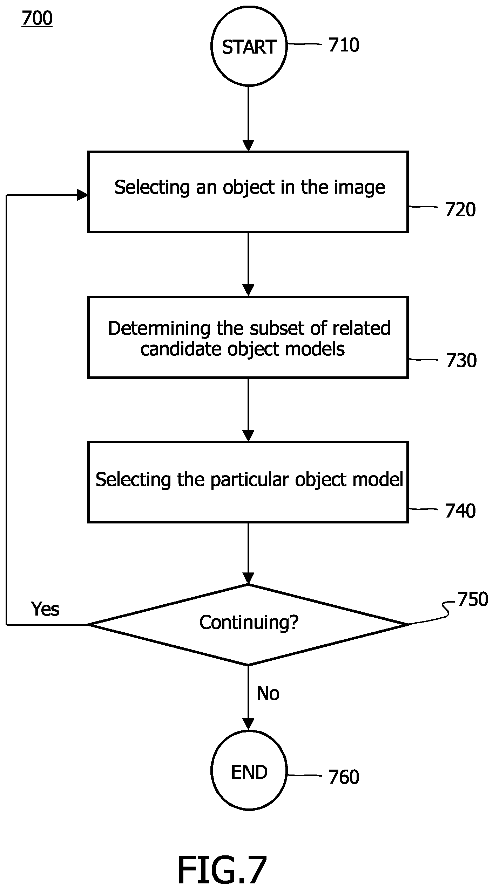

Fig. 7 schematically shows an embodiment of the method of linking 700. The first step 710 is the start step. This step involves all the initializations that need to be done in a particular implementation of the method. In the first selection step 720 an object is selected in the image. This step requires a user input. In the determining step 730 the subset of related candidate object models is determined. These object models are elements of a set of object models specific of the application of the method. In the second selection step 740 the particular object model is selected from the subset of related candidate object models. This particular object model is linked to the object selected in the image. The link, the association between the object in the image and the particular object model from the set of object models, is outputted for storing or passed to another process for further use. In step 750 a decision is made whether to continue or to terminate linking objects in the image to object models. This decision can be either computed or inputted by the user. In case of a partitioned image, the method may continue until all portions of the image are linked with their respective particular objects. When the last portion is linked, the method goes to the terminating step 760 and terminates.

The linking system 100, the registration system 400, and the segmentation system 500 of the invention may be implemented as a computer program product and can be stored on any suitable medium such as, for example, magnetic tape, magnetic disk, or optical disk. This computer program can be loaded into a computer arrangement comprising a processing unit and a memory. The computer program product, after being loaded, provides the processing unit with the capability to carry out the linking, registration and/or segmentation tasks.

It should be noted that the above-mentioned embodiments illustrate rather than limit the invention and that those skilled in the art will be able to design alternative embodiments without departing from the scope of the appended claims. In the claims, any reference signs placed between parentheses shall not be construed as limiting the claim. The word 'comprising' does not exclude the presence of elements or steps not listed in a claim. The word "a" or "an" preceding an element does not exclude the presence of a plurality of such elements. The invention can be implemented by means of hardware comprising several distinct elements and by means of a suitably programmed computer. In the system claims enumerating several units, several of these units can be embodied by one and the same item of hardware or software. The use of the words first, second and third, etcetera do not indicate any ordering. These words are to be interpreted as names.

## Claims

1. A linking system (100) for linking a particular object model from a set of object models with an object in an image, the linking system comprising
- a first selection unit (110) configured to select the object in the image in response to a user input from an input device indicating a region of the object in the image;
- a determining unit (120) configured to determine a subset of related candidate object models from the set of object models on the basis of the selected object,wherein the subset comprises a particular object model to be linked to the selected object;
- a second selection unit (130) configured to select the particular object model from the subset of related candidate object models based on a user input from the input device, and
- a display unit configured to display a representation of the subset of related candidate object models,
wherein the subset of related candidate object models from the set of object models is determined by computing a similarity measure between each of the object models in the set of object models and the selected object in the image,
wherein the similarity measure is computed by the ratio of the non-overlap area or volume of the selected object and the object model over the overlap area or volume of the selected object and the object model.

2. A linking system as claimed in claim 1 wherein the first selection unit is configured to segment the selected object and represent the selected object by at least one of: a bitmap, a grayscale map or a color map.

3. A linking system as claimed in claim 1, wherein the similarity measure is computed based on comparing similarity of one or more features between each related candidate object model and the selected object, wherein the one or more features includes at least one of the following:
- a shape of the selected object;
- a size of the selected object;
- a location of the selected object in the image;
- an orientation of the selected object in the image;
- an intensity distribution in the selected object; or
a color distribution in the selected object.

4. A linking system as claimed in claim 1 wherein selecting the particular object model from the subset of related candidate object models is based on a feature of the selected object, the feature being at least one of the following:
- a name of the selected object;
- a shape of the selected object;
- a size of the selected object;
- a location of the selected object in the image;
- an orientation of the selected object in the image;
- an intensity distribution in the selected object; or
- a color distribution in the selected object.

5. A linking system as claimed in claim 1, wherein the area or volume of non-overlapping parts is minimized by scaling and rigidly transforming the object model.

6. A linking system as claimed in claim 1, wherein the area or volume of the non-overlapping part of the selected object and the object model is replaced by an integral of the absolute value of the difference between the gray values at the corresponding pixels or voxels of the object model superimposed on the selected object in a gray-scale image.

7. A linking system as claimed in claim 6, wherein the integral of the absolute value is minimized by elastically registering each object model from the set of object model with the image.

8. A linking system as claimed in any one of the claims 1 to 7, wherein the object is an organ or a part of an organ of a human or an animal, and the set of object models is an atlas of organs or parts of organs of a human or an animal.

9. A registration system (400) comprising
- a linking unit (410) comprising the linking system for linking a particular object model from a set of object models with an object in the image, as claimed in any one of claims 1 to 8 and
- a registering unit (420) for registering the linked particular object model with the object in the context of the image.

10. A segmentation system (500) comprising
- a registration unit (510) comprising the registration system for registering a particular object model with an object, as claimed in claim 9, and
- a segmentation unit (520) for segmenting the object on the basis of the registered particular object model.

11. A workstation (600) comprising the system as claimed in any one of the claims 1 to 10.

12. A method (700) of linking an object model from a set of object models with an object in an image, the method comprising
- a first selection step (720) for selecting the object in the image in response to an input from an input device indicating a region of the object in the image;
- a determining step (730) for determining a subset of related candidate object models from the set of object models on the basis of the selected object, wherein the subset comprises a particular object model to be linked to the selected object;
- a displaying step for displaying a representation of the subset of related candidate object models and
- a second selection step (740) for selecting a particular object model from the subset of related candidate object models based on a user input,
wherein in the determining step (730), the subset of related candidate object models from the set of object models is determined by computing a similarity measure between each of the object models in the set of object models and the selected object in the image,
wherein the similarity measure is computed by the ratio of the non-overlap area or volume of the selected object and the object model over the overlap area or volume of the selected object and the object model.

13. A computer program product to be loaded by a computer arrangement, comprising instructions for linking an object model from a set of object models with an object in an image, the computer arrangement comprising a processing unit and a memory, the computer program product, after being loaded, providing said processing unit with the capability to carry out the tasks as claimed in claim 12.

## Patentansprüche

1. Verbindungssystem (100) zum Verbinden eines bestimmten Objektmodells aus einer Gruppe von Objektmodellen mit einem Objekt in einem Bild, wobei das Verbindungssystem Folgendes umfasst:
- eine erste Auswahleinheit (110), die konfiguriert ist, um das Objekt in dem Bild in Reaktion auf eine Benutzereingabe von einer Eingabevorrichtung auszuwählen, die eine Region des Objekts in dem Bild angibt;
- eine Ermittlungseinheit (120), die konfiguriert ist, um basierend auf dem ausgewählten Objekt eine Teilgruppe von zusammenhängenden in Frage kommenden Objektmodellen aus der Gruppe von Objektmodellen zu ermitteln, wobei die Teilgruppe ein bestimmtes Objektmodell umfasst, das mit dem ausgewählten Objekt zu verbinden ist;
- eine zweite Auswahleinheit (130), die konfiguriert ist, um das bestimmte Objektmodell basierend auf einer Benutzereingabe von der Eingabevorrichtung aus der Teilgruppe von zusammenhängenden in Frage kommenden Objektmodellen auszuwählen, und
- eine Anzeigeeinheit, die konfiguriert ist, um eine Darstellung der Teilgruppe von zusammenhängenden in Frage kommenden Objektmodellen anzuzeigen,
wobei die Teilgruppe von zusammenhängenden in Frage kommenden Objektmodellen aus der Gruppe von Objektmodellen ermittelt wird, indem ein Ähnlichkeitsmaß zwischen jedem der Objektmodelle in der Gruppe der Objektmodelle und dem ausgewählten Objekt in dem Bild berechnet wird,
wobei das Ähnlichkeitsmaß durch das Verhältnis der nicht überlappenden Fläche oder des nicht überlappenden Volumens des ausgewählten Objekts und des Objektmodells zu der Überlappungsfläche oder dem Überlappungsvolumen des ausgewählten Objekts und des Objektmodells berechnet wird.

2. Verbindungssystem nach Anspruch 1, wobei die erste Auswahleinheit konfiguriert ist, um das ausgewählte Objekt zu segmentieren und das ausgewählte Objekt durch mindestens entweder eine Bitkarte, eine Grauskalenkarte oder eine Farbkarte darzustellen.

3. Verbindungssystem nach Anspruch 1, wobei das Ähnlichkeitsmaß basierend auf dem Vergleichen der Ähnlichkeit von einem oder mehreren Merkmalen zwischen jedem zusammenhängenden in Frage kommenden Objektmodell und dem ausgewählten Objekt berechnet wird, wobei das eine oder mehrere Merkmale mindestens eines von Folgendem umfasst bzw. umfassen:
- eine Form das ausgewählten Objekts;
- eine Größe des ausgewählten Objekts;
- einen Ort des ausgewählten Objekts in dem Bild;
- eine Orientierung des ausgewählten Objekts in dem Bild;
- eine Intensitätsverteilung in dem ausgewählten Objekt, oder
- eine Farbverteilung in dem ausgewählten Objekt.

4. Verbindungssystem nach Anspruch 1, wobei das Auswählen des bestimmten Objektmodells aus der Teilgruppe von zusammenhängenden in Frage kommenden Objektmodellen auf einem Merkmal des ausgewählten Objekts basiert, wobei das Merkmal mindestens eines von Folgendem ist:
- ein Name des ausgewählten Objekts;
- eine Form des ausgewählten Objekts;
- eine Größe des ausgewählten Objekts;
- ein Ort des ausgewählten Objekts in dem Bild;
- eine Orientierung des ausgewählten Objekts in dem Bild;
- eine Intensitätsverteilung in dem ausgewählten Objekt; oder
- eine Farbverteilung in dem ausgewählten Objekt.

5. Verbindungssystem nach Anspruch 1, wobei die Fläche oder das Volumen der nicht-überlappenden Teile durch Skalieren und starres Transformieren des Objektmodells minimiert wird.

6. Verbindungssystem nach Anspruch 1, wobei die Fläche oder das Volumen des nicht-überlappenden Teils des ausgewählten Objekts und des Objektmodells ersetzt wird durch ein Integral des Absolutwerts der Differenz zwischen den Grauwerten bei den übereinstimmenden Pixeln oder Voxeln des Objektmodells, das dem ausgewählten Objekt in einem Grauskalenbild überlagert ist.

7. Verbindungssystem nach Anspruch 6, wobei das Integral des Absolutwerts durch elastisches Registrieren jedes Objektmodells aus der Gruppe der Objektmodelle mit dem Bild minimiert wird.

8. Verbindungssystem nach einem der Ansprüche 1 bis 7, wobei das Objekt ein Organ oder ein Teil eines Organs eines Menschen oder eines Tiers ist, und wobei die Gruppe von Objektmodellen ein Atlas der Organe oder Organteile eines Menschen oder eines Tiers ist.

9. Registrierungssystem (400), das Folgendes umfasst:
- eine Verbindungseinheit (410) umfassend das Verbindungssystem zum Verbinden eines bestimmten Objektmodells aus einer Gruppe von Objektmodellen mit einem Objekt in dem Bild, wie in einem der Ansprüche 1 bis 8 beansprucht, und
- eine Registrierungseinheit (420) zum Registrieren des verbundenen bestimmten Objektmodells mit dem Objekt im Kontext des Bilds.

10. Segmentierungssystem (500), das Folgendes umfasst:
- eine Registrierungseinheit (510) umfassend das Registrierungssystem zum Registrieren eines bestimmten Objektmodells mit einem Objekt, wie in Anspruch 9 beansprucht, und
- eine Segmentierungseinheit (520) zum Segmentieren des Objekts auf der Basis des registrierten bestimmten Objektmodells.

11. Workstation (600) umfassend das System nach einem der Ansprüche 1 bis 10.

12. Verfahren (700) zum Verbinden eines Objektmodells aus einer Gruppe von Objektmodellen mit einem Objekt in einem Bild, wobei das Verfahren Folgendes umfasst:
- einen ersten Auswahlschritt (720) zum Auswählen des Objekts in dem Bild in Reaktion auf eine Benutzereingabe von einer Eingabevorrichtung, die eine Region des Objekts in dem Bild angibt;
- einen Ermittlungsschritt (730) zum Ermitteln einer Teilgruppe von zusammenhängenden in Frage kommenden Objektmodellen aus der Gruppe von Objektmodellen basierend auf dem ausgewählten Objekt, wobei die Teilgruppe ein bestimmtes Objektmodell umfasst, das mit dem ausgewählten Objekt zu verbinden ist;
- einen Anzeigeschritt zum Anzeigen einer Darstellung der Teilgruppe von zusammenhängenden in Frage kommenden Objektmodellen und
- einen zweiten Auswahlschritt (740) zum Auswählen eines bestimmten Objektmodells aus der Teilgruppe von zusammenhängenden in Frage kommenden Objektmodellen basierend auf einer Benutzereingabe,
wobei in dem Ermittlungsschritt (730) die Teilgruppe von zusammenhängenden in Frage kommenden Objektmodellen aus der Gruppe von Objektmodellen ermittelt wird, indem ein Ähnlichkeitsmaß zwischen jedem der Objektmodelle in der Gruppe der Objektmodelle und dem ausgewählten Objekt in dem Bild berechnet wird,
wobei das Ähnlichkeitsmaß durch das Verhältnis der nicht überlappenden Fläche oder des nicht überlappenden Volumens des ausgewählten Objekts und des Objektmodells zu der Überlappungsfläche oder dem Überlappungsvolumen des ausgewählten Objekts und des Objektmodells berechnet wird.

13. Computerprogrammprodukt, das durch eine Computeranordnung zu laden ist, umfassend Anweisungen zum Verbinden eines Objektmodells aus einer Gruppe von Objektmodellen mit einem Objekt in einem Bild, wobei die Computeranordnung eine Verarbeitungseinheit und einen Speicher umfasst, wobei das Computerprogrammprodukt, nachdem es geladen ist, die genannte Verarbeitungseinheit in die Lage versetzt, die Aufgaben nach Anspruch 12 auszuführen.

## Revendications

1. Système de liaison (100) pour lier un modèle d'objet particulier d'un groupe de modèles d'objets à un objet dans une image, le système de liaison comprenant
- une première unité de sélection (110) configurée pour sélectionner l'objet dans l'image en réponse à une entrée utilisateur d'un dispositif d'entrée indiquant une région de l'objet dans l'image ;
- une unité de détermination (120) configurée pour déterminer un sous-groupe de modèles d'objets candidats apparentés du groupe de modèles d'objets sur la base de l'objet sélectionné, dans lequel le sous-groupe comprend un modèle d'objet particulier à lier à l'objet sélectionné ;
- une deuxième unité de sélection (130) configurée pour sélectionner le modèle d'objet particulier du sous-groupe de modèles d'objets candidats apparentés sur la base d'une entrée utilisateur du dispositif d'entrée, et
- une unité d'affichage configurée pour afficher une représentation du sous-groupe de modèles d'objets candidats apparentés,
dans lequel le sous-groupe de modèles d'objets candidats apparentés du groupe de modèles d'objets est déterminé par calcul d'une mesure de similitude entre chacun des modèles d'objets dans le groupe des modèles d'objets et l'objet sélectionné dans l'image,
dans lequel la mesure de similitude est calculée par le rapport de la zone non-chevauchante ou du volume de l'objet sélectionné et du modèle d'objet sur la zone de chevauchement ou le volume de l'objet sélectionné et du modèle d'objet.

2. Système de liaison selon la revendication 1, dans lequel la première unité de sélection est configurée pour segmenter l'objet sélectionné et représenter l'objet sélectionné par au moins l'un parmi : un bitmap, un niveau de gris ou une carte de couleurs.

3. Système de liaison selon la revendication 1, dans lequel la mesure de similitude est calculée sur la base de la comparaison d'une similitude d'une ou plusieurs caractéristiques entre chaque modèle d'objet candidat apparenté et l'objet sélectionné, dans lequel l'une ou plusieurs caractéristique(s) comprennent au moins l'une des suivantes :
- une forme de l'objet sélectionné ;
- une taille de l'objet sélectionné ;
- un emplacement de l'objet sélectionné dans l'image ;
- une orientation de l'objet sélectionné dans l'image ;
- une distribution d'intensité dans l'objet sélectionné ; ou
- une distribution de couleur dans l'objet sélectionné.

4. Système de liaison selon la revendication 1, dans lequel la sélection du modèle d'objet particulier du sous-groupe de modèles d'objets candidats apparentés est basée sur une caractéristique de l'objet sélectionné, la caractéristique étant au moins l'une des suivantes :
- un nom de l'objet sélectionné ;
- une forme de l'objet sélectionné ;
- une taille de l'objet sélectionné ;
- un emplacement de l'objet sélectionné dans l'image ;
- une orientation de l'objet sélectionné dans l'image ;
- une distribution d'intensité dans l'objet sélectionné ; ou
- une distribution de couleur dans l'objet sélectionné.

5. Système de liaison selon la revendication 1, dans lequel la zone ou le volume de parties non chevauchantes est réduit(e) par la mise à l'échelle et la transformation stricte du modèle d'objet.

6. Système de liaison selon la revendication 1, dans lequel la zone ou le volume de la partie non chevauchante de l'objet sélectionné et du modèle d'objet est remplacé(e) par une intégrale de la valeur absolue de la différence entre les valeurs de gris sur les pixels ou voxels correspondants du modèle d'objet superposé sur l'objet sélectionné dans une image de niveaux de gris.

7. Système de liaison selon la revendication 6, dans lequel l'intégrale de la valeur absolue est réduite par un enregistrement élastique de chaque modèle d'objet du groupe de modèles d'objets avec l'image.

8. Système de liaison selon l'une quelconque des revendications 1 à 7, dans lequel l'objet est un organe ou une partie d'un organe d'un être humain ou d'un animal, et le groupe de modèles d'objets est un atlas d'organes ou de parties d'organes d'un être humain ou d'un animal.

9. Système d'enregistrement (400) comprenant
- une unité de liaison (410) comprenant le système de liaison pour la liaison d'un modèle d'objet particulier d'un groupe de modèles d'objets avec un objet dans l'image, selon l'une quelconque des revendications 1 à 8, et
- une unité d'enregistrement (420) pour enregistrer le modèle d'objet lié particulier avec l'objet dans le contexte de l'image.

10. Système de segmentation (500) comprenant
- une unité d'enregistrement (510) comprenant le système d'enregistrement pour enregistrer un modèle d'objet particulier avec un objet, selon la revendication 9, et
- une unité de segmentation (520) pour segmenter l'objet sur la base du modèle d'objet particulier enregistré.

11. Poste de travail (600) comprenant le système selon l'une quelconque des revendications 1 à 10.

12. Procédé (700) de liaison d'un modèle d'objet d'un groupe de modèles d'objets à un objet dans une image, le procédé comprenant
- une première étape de sélection (720) pour sélectionner l'objet dans l'image en réponse à une entrée d'un dispositif d'entrée indiquant une région de l'objet dans l'image ;
- une étape de détermination (730) pour déterminer un sous-groupe de modèles d'objets candidats apparentés du groupe de modèles d'objets sur la base de l'objet sélectionné, dans lequel le sous-groupe comprend un modèle d'objet particulier à lier à l'objet sélectionné ;
- une étape d'affichage pour afficher une représentation du sous-groupe de modèles d'objets candidats apparentés et
- une deuxième étape de sélection (740) pour sélectionner un modèle d'objet particulier du sous-groupe de modèles d'objets candidats apparentés sur la base d'une entrée utilisateur,
dans lequel à l'étape de détermination (730), le sous-groupe de modèles d'objets candidats apparentés du groupe de modèles d'objets est déterminé en calculant une mesure de similitude entre chacun des modèles d'objets dans le groupe de modèles d'objet et l'objet sélectionné dans l'image,
dans lequel la mesure de similitude est calculée par le rapport de la zone non chevauchante ou du volume de l'objet sélectionné et du modèle d'objet sur la zone de chevauchement ou le volume de l'objet sélectionné et du modèle d'objet.

13. Produit de programme informatique à charger par un dispositif informatique, comprenant des instructions pour lier un modèle d'objet d'un groupe de modèles d'objets à un objet dans une image, le dispositif informatique comprenant une unité de traitement et une mémoire, le produit de programme informatique, après avoir été chargé, fournissant à ladite unité de traitement, la capacité de réaliser les tâches telles que revendiquées dans la revendication 12.
